# EUROPEAN PATENT SPECIFICATION

(11) **EP 3 057 886 B1**
(45) Date of publication and mention of the grant of the patent: **23.08.2017**
(21) Application number: 14802164.5
(22) Date of filing: 16.10.2014
(51) Int. Cl.: B65D 85/804

(54) **CAPSULE FOR BEVERAGES**
KAPSEL FÜR GETRÄNKE
CAPSULE POUR BOISSONS

(30) Priority: 17.10.2013 IT MO20130297
(43) Date of publication of application: 24.08.2016
(73) Proprietor: Sarong Societa' Per Azioni, 42046 Reggiolo (RE) (IT)
(72) Inventor: BARTOLI, Andrea, I-42123 Reggio Emilia (IT); CAPITINI, Davide, I-42123 Reggio Emilia (IT); GRILLENZONI, Alessandro, I-42018 San Martino in Rio (RE) (IT); TRALDI, Flavio, I-41030 San Prospero (Modena) (IT)
(74) Representative: Persi, Patrizia
(86) International application number: PCT/IB2014/065358
(87) International publication number: WO 2015/056202

(56) References cited:
- EP-A1- 2 412 645
- EP-A1- 2 484 605
- EP-A1- 2 650 234
- WO-A1-03/073896
- WO-A1-2012/076135
- FR-A1- 2 556 323
- US-A1- 2011 033 580

## Description

The invention relates to capsules or containers for preparing products, for example beverages, in automatic dispensing machines.

In particular, the invention relates to a single-dose and disposable sealed capsule containing an initial product such as, for example, powder coffee or an infusion product that is able to make a final product by interacting with pressurised fluid.

The known capsules for use in dispensing machines are disposable and single-dose containers comprising an outer casing, made of plastics impermeable to liquids and to gases and having a beaker or cup shape.

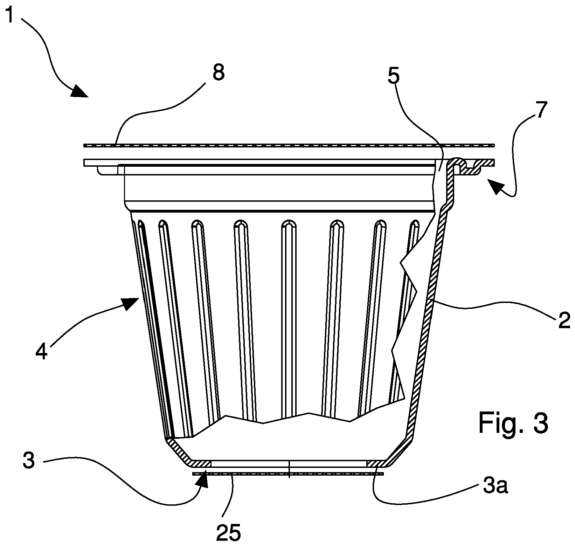

Figure 3 shows a capsule 1 as disclosed in application ITMO2013A000214 of the same applicant.

The casing, indicated by 2, has a base wall 3 and a side wall 4 defining an open cavity 5 into which a product P can be inserted, for example ground coffee or tea, from which the beverage can be obtained. A flange-shaped rim 7 is connected to the side wall 4, extends therefrom and is arranged around an upper opening of the cavity 5. The upper opening is hermetically sealed by a cover element 8, typically an aluminium or plastics film, that is fixed to the edge 7 of the casing 2 so as to seal the product P inside the container.

The base wall 3 of the capsule 1 further has a preferably circular opening bounded by an annular base rim 3a onto which a further cover element 25 is fixed, that is made of a material that is similar to the material of the cover element 8.

The capsule is perforable to enable the pressurised liquid, typically water, to be delivered, and the obtained coffee beverage to exit. In particular, the further cover element 25 and cover element 8 are respectively perforable by suitable pressurised fluid injecting means and extraction means of a dispensing machine to enable the pressurised liquid to be delivered and the beverage to be extracted.

Alternatively, the capsule can also be inserted into dispensing machines of known type in which the cover element 8 and the further cover element are respectively perforable by pressurised fluid injecting means and extracting means of a dispensing machine.

In other words, both the cover element 8 and the further cover element 25 are made of an easily perforable material that causes the capsule to be able to be used with great flexibility of use in dispensing machines, regardless of whether the cavity faces upwards or downwards.

The capsules are usually filled with the initial product P by means of a manufacturing process that supplies the thermoformed casings to a filling station and subsequently supplies these filled casings to a welding station to seal the cavity by welding the cover element to the flange rim of the capsule, the further cover element having been already fixed to close the base rim 3a. During this fixing of the cover element, into each capsule an inert gas such as nitrogen is delivered to replace the air to maintain the organoleptic properties of the initial product P unaltered owing to the inhibiting and bacteriostatic action of the gas used.

Nevertheless, if ground coffee is supplied to each casing, it is known that after roasting and grinding the coffee continues to be transformed even in the presence of the inert gas, releasing over time carbon dioxide and aromas in a ratio that is inversely proportionate to the time that has elapsed since roasting. For this reason, the ground coffee is usually subjected to a degassing step in storage silos, which is necessary for freeing the coffee from the carbon dioxide that is naturally released by the coffee.

One problem of capsules of known type is that they can be filled with ground coffee that has not been subjected to the degassing step or has not been subjected to the degassing step is an efficient manner. In these capsules, the coffee can release carbon dioxide and can thus cause an unexpected increase of the pressure inside the capsule, which may cause deformations or an undesired swelling of the cover element and/or of the further cover element but which can even compromise the wholeness of the capsule, usually at the further cover element.

The excessive pressure can in fact cause tearing of the further cover element and the separation thereof from the base wall of the capsule, the further cover element being connected to the base wall by a welding rim that depends on the dimensions, which are often reduced, of the base wall.

The problem of the release of carbon dioxide is known not only for coffee, as said previously, but also for certain types of partially fermented tea, which may thus continue to ferment, releasing carbon dioxide also after the capsules have been filled. Also in this case, a filled capsule may break, due to the excessive build-up of pressure inside the capsule.

This problem is even greater if it is considered that after the capsules have been filled with the initial product P and packaged they may be stored for a long time in warehouses waiting to be distributed to consumers. A capsule may also break after the capsule has been purchased by a consumer and can thus cause damage in an uncontrolled manner.

EP 2650234 discloses a capsule for beverages according to the preamble of claim 1.

EP 2 484 605 discloses a capsule for beverages having a body extended along a main axis of the capsule from a main opening to a bottom wall that includes a single through-hole.

A closing unit closes the main opening of the capsule, and a removable closing unit closes the through-hole.

EP 2412645 discloses a capsule for beverages having a body formed from a single piece of thermoplastic material and extending along a main axis. A liquid impermeable, grippable cover plate is fixed on an external face of a bottom wall to close a central bore of the wall. The cover plate has a gripping tab allowing detachment of the plate from the wall to uncover the bore.

WO 2012/076135 disclose a pre-packaged capsule of coffee powder for espresso coffee machines, comprising a substantially frustoconical-shaped container body made of a substantially water-tight material and tapered from the outlet edge towards the bottom wall. The bottom wall of the container body comprises an outwardly directed axial frustoconical cavity to which a frustoconical axial relief projecting and tapered towards the inside of said container body corresponds, the side wall the frustoconical cavity being provided with a plurality of openings communicating with the inside of the container body and having dimensions such as to prevent substantially the passage of the coffee powder and allow the passage of the infusion.

FR 2556323 discloses a capsule for the preparation of drinks, such as coffee, tea and other infusions. The capsule has the form of a container body receiving a predetermined quantity of the drink constituent, such as ground roasted coffee, covered in a sealed manner at its top part by a cover and closed at its bottom part by a screen, forming a sieve.

US 2011/033580 discloses a capsule for beverages comprising a circumferential wall, a bottom closing the circumferential wall at a first end, and a lid closing the circumferential wall at a second end opposite the bottom. The circumferential wall, the bottom and the lid enclose an inner space comprising an extractable product. The bottom comprises an entrance area formed by an entrance filter formed by a plurality of entrance openings in the bottom.

WO 03/073896 discloses a sealed container for liquid food extraction. The sealed container comprises a body and a cover which are securely adhered on a flange extended horizontally outwardly from an upper end of the body. The body has outlets of a small diameter formed at the bottom thereof for preventing passing of contents therethrough and for discharging only extracted liquid therethrough. A detachable screen is disposed on the outlets for isolating the contents from the outside.

One object of the present invention is to improve known capsules for beverages, in particular capsules that are usable in known dispensing machines, ensuring the wholeness of the capsule regardless of the initial product with which it is filled.

Another object is to devise a capsule that can be filled also with initial products that are able to release a gas after filling without the wholeness thereof being compromised over time.

A further object is to devise a capsule in which a closing element is fixed to a flange rim and a further closing element is fixed to the base wall, in which the further closing element does not separate from the base wall when subjected to pressure.

A still further object is to obtain a capsule that is cheap and easy to make.

According to a first aspect of the invention, a capsule for beverages is provided according to claim 1 and one or more of the claims appended thereto.

The invention can be better understood and implemented with reference to the attached drawings, which illustrate some embodiments thereof by way of non-limiting example, in which:
Figure 1 is a schematic cross section, with parts removed for the sake of clarity, of a capsule according to the invention;
Figure 2 is a partially enlarged schematic cross section of a base wall of the capsule in Figure 1;
Figure 3 is a schematic cross section of a known capsule for beverages.

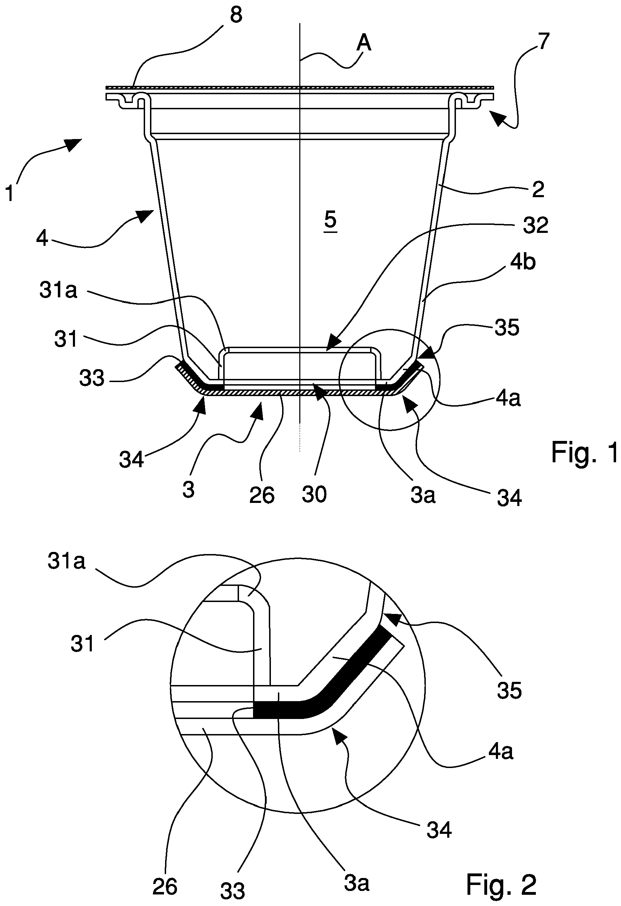

With reference to figure 1, there is illustrated a capsule 1 for beverages according to the invention, for producing a final product, in particular a hot beverage, for example coffee, barley, herbal tea, tea, chocolate, etc, by injecting a hot pressurised fluid F inside the capsule.

It is pointed out that for uniformity with the prior art capsule disclosed in figure 3, the same numeric references are assigned to the same components.

The capsule 1 of the invention comprises an outer casing or container 2, in turn comprising a base wall 3 and a side wall 4 defining an open cavity 5 and that is suitable for containing an initial product P, for example a soluble or percolable food product to be combined with a fluid, typically water, to obtain a final product. The base wall 3 and the side wall 4 define a body of the capsule 1 substantially in the form of a beaker or cup.

According to one embodiment, the base wall 3 is flat and in particular of circular shape.

The casing further comprises a flange rim 7 connected to the side wall 4 and extending therefrom, arranged around an upper opening of the cavity 5. The flange rim 7 is further opposite the base wall 3 and faces outside with respect to the cavity 5.

The base wall 3 of the capsule has a preferably circular opening 30 bounded by a base rim 3a, for example annular, extending up to the side wall 4 of the capsule and comprises an annular wall 31 that extends around the opening 30 inside the cavity 5 and defines a recessed portion of the base wall 3, made in a single body with the base wall 3.

The annular wall 31 has an inner end provided with a respective rim 31a facing a symmetry axis A of the capsule 1, that bounds a hole 32 substantially of the same size as the opening 30. The annular wall 31 defines in this manner a through conduit having the opening 30 that is an outer end opening, i.e. facing the outside of the capsule, on the side opposite the hole 32 of the inner end.

As shown in figure 1, the rim 31a of the annular wall 31 faces the portion of the cavity 5 intended for receiving the initial product P and contributes, if the base wall 3 of the capsule 1 is intended in use to be perforated by injecting means of the dispensing machine and the initial product is powder coffee, to maintaining said coffee powder compacted, avoiding preferential fluid paths being created therein that may give rise to a beverage of poor quality. It is in fact known that the pressurised fluid injected into the capsule has to be distributed as uniformly as possible in the initial product in order to be able to extract therefrom aromatic components to be transferred to the beverage, above all if the initial product is powder coffee. The through conduit defined by the annular wall 31 achieves in use guiding means of injecting means of the dispensing machine.

The casing 2 is made by forming a sheet of thermoformable plastics (not shown) that is suitable for the process of preparing the final product from the initial product P, for example able to withstand temperatures up to 100°C and pressures up to 5 bar without deformation.

Such a sheet of plastics 100 can have a thickness comprised between 15 micron and 1600 micron, in particular between 400 micron and 1200 micron and is made of polyolefins, for example polypropylene PP and/or polyethylene PE and/or polyamide PA.

In detail, the sheet material can comprise a first layer of material, in particular suitable for contacting and/or conserving the initial product P, for example made of polypropylene PP that is impermeable to humidity, a second layer of material that is not in contact with the initial product P made of a material that is impermeable to gases, in particular to oxygen and optionally also to humidity, also known as a barrier layer, and a third external layer of material.

The barrier layer, interposed between the first and the third layer, ensures the complete insulation of the cavity 5 from the outer environment, in particular if the first layer is permeable over time to oxygen. The barrier layer has a thickness comprised between 2 micron and 100 micron, in particular between 15 micron and 70 micron, and is made, for example, of ethylene vinyl alcohol (EVOH), which is gas-impermeable only to the oxygen or polyvinylidene chloride (PVDC), which is gas-impermeable to both oxygen and humidity.

According to a first embodiment (not shown) of the sheet material, the first and third layer are made of the same material, for example polypropylene PP and are coupled with the barrier layer interposed therebetween. These layers can have the same thickness (for example 350 micron), or different thicknesses (for example the first layer can have a thickness of 500 micron whereas the third layer can have a thickness of 300 micron).

According to a second embodiment (not shown), the first layer is a support and is made of polypropylene PP, the second layer is the barrier layer (EVOH or PVDC) and the third layer is an extruded layer of polypropylene PP or polyethylene PE, with a thickness of 15 micron, which is coupled with the first and the second layer during the process of manufacturing the sheet material.

The sheet material, both according to the first and the second embodiment, is thus selected so as to protect over time the initial product P contained in the capsule from humidity and oxygen.

The capsule further comprises a cover element 8 fixed to the rim 7 of the casing 2 to seal hermetically the capsule 1, i.e. the open cavity 5 and thus preserve the product P. The cover element 8 comprises a film of aluminium or a plastic film provided with a barrier layer that is perforable by extracting means of the final product or by injecting means of the initial fluid F of the dispensing machine.

The cover element 8 is fixed to the rim 7 of the casing 2 by thermal or ultrasound welding or by gluing. Preferably, the cover element 8 is fixed to the casing 2 by locking thermowelding, in the sense that this thermowelding ensures that the capsule conserves over time the initial product P in ideal conditions when stored during storage.

A closing element 26, which is similar to the cover element 8 and is perforable by injecting means of the fluid F or by extracting means of the final product, is fixed to the further rim 3a outside the base wall 3, to hermetically seal the opening 30. As already said for the cover element 8, the closing element 26 is fixed to the annular rim 3a by thermal or ultrasound welding or by gluing and preferably the closing element 26 is fixed to the casing 2 by locking thermowelding in a joining portion 33.

The thickness of the cover element 8 and/or of the closing element 26 is expressed in grammage and is comprised between 5 and 120 g/m².

According to the invention, the closing element 26 has greater dimensions than the base wall 3 and is also fixed to the side wall 4 to remain joined to the capsule even in the presence of a pressure increase inside the capsule, as will be seen below.

It should be noted that the base rim 3a defines a base edge 34 with the side wall 4 and that the closing element 26 extends beyond the base edge 34 and is superimposed on the side wall 4 along the entire base edge 34, and namely angularly all around with respect to the symmetry axis A of the capsule.

The closing element 26 is superimposed and fixed to the side wall for at least one strip of 2 mm measured from the base edge 34, in particular for 2.5 mm, but can be fixed to the side wall 4 for the entire side wall 4.

If the closing element 26 is disc-shaped and the base wall is circular and flat, or a polygon that can be inscribed in a circle, the closing element 26 has a greater diameter than the base wall 3.

The side wall 4 comprises a first portion 4a connected to the base edge 34 and a second portion 4b defining with the first portion a side edge 35. The second portion 4b extends up to the flange rim 7, as shown in figure 1.

It should be noted that the first portion 4a is of frustoconical shape and has a first tilt, which is greater than a second tilt of the second portion 4b, which is also of frustoconical shape. The first and the second tilt are measured with respect to the symmetry axis A of the capsule.

Nevertheless, it is pointed out that the side wall 4 and thus the body of the capsule could be shaped differently and not have frustoconical portions but for example truncated-pyramid portions that can be inscribed into frustoconical portions. For example, the first portion could be truncated-pyramid and the second portion could also be truncated-pyramid, both, for example, with an octagonal base but with a different tilt.

Optionally, the side wall 4 of the capsule could also comprise a plurality of frustoconical or truncated pyramid portions with a gradually decreasing tilt and thus comprise a plurality of side edges.

In other words, although the closing element 26 is shown in figures 1 and 2 as associated with the casing 2 having a specific shape, the casing 2 could be shaped otherwise, with regard to the base wall 3, the side wall 4 or the flange rim 7, and everything said previously with regard to the closing element 26 would continue to be valid.

We have said that the closing element 26 is fixed to the base rim 3a and to the side wall 4 by thermowelding.

In detail, the closing element 26 is fixed to the side wall 4 in the entire first portion 4a. In other words, the joining portion 33 by means of which the closing element 26 is thermowelded to the capsule 1 extends in the annular base rim 3a, which is flat, and in the first portion 4a of the side wall 4, oblique to the base rim 3a, through the base edge 34 up to the side edge 35.

Experimentally, it has been verified that the closing element 26 remains joined to the capsule even in the presence of a pressure increase inside the capsule because the joining portion 33 placed at the base rim 3a separates at pressure of about 2 bar whereas the joining portion 33 placed in the side wall 4 remains unchanged up to 4.5 bar, a pressure beyond which the casing 2 of the capsule 1 is torn together with the closing element 26.

In detail it has been verified that:
- at 0.5 bar the closing element 26 shows a swelling but the joining portion 33, placed in the base rim 3a and in the first portion 4a, remains unchanged;
- at 1 bar the joining portion 33 placed in the base rim 3a starts to separate but the joining portion placed in the first portion 4a remains unchanged;
- at about 2 bar the joining portion 33 placed in the base rim 3a separates but the joining portion placed in the first portion 4a remains unchanged;
- up to 4.5 bar the joining portion 33 in the first portion 4a remains unchanged;
- beyond 4.5 bar the closing element 26 and the casing 2 are torn by excessive pressure but the thermowelding in the joining portion 33 through which the closing element 26 is joined to the capsule 1 remains unchanged.

Up to 4.5 bar, it is thus ensured that a circumferal rim of the closing element 26 remains joined to the capsule, in particular to the side wall 4 thereof, by locking thermowelding ensuring the wholeness of the capsule even at high pressures.

It has in fact been observed that the pressure released inside the cavity 5 of the capsule stresses the closing element 26 perpendicularly at the opening 30 and this causes the joining portion to be pushed in a direction that is orthogonal to the welding plane in the base rim 3a.

Nevertheless, the joining portion 33 is stressed only obliquely at the first portion 4a, after the base rim 3a has been separated, because the closing element 26 continues to be pushed mainly perpendicularly at the opening 30 by the pressure inside the capsule.

Owing thus to the fact that the closing element 26 is fixed both to the base rim 3a and to the side wall 4, a capsule can also be filled with an initial product that releases gas inside the capsule, because both the cover element 8 and the closing element 26 can withstand high pressure without compromising the wholeness of the capsule.

It follows that the capsule can also be filled with coffee that has not been completely degassed, because the higher pressure that may develop inside a capsule is less than the pressure at which the closing element 26 separates from the capsule. The capsule of the invention thus remains sealed even after a time has elapsed since the filling thereof, regardless of the initial product with which the capsule is filled (ground coffee degassed or not or tea) and regardless of the moment at which it is consumed by the user.

Further, the process of manufacturing each capsule becomes cheaper because it is no longer necessary to subject the ground coffee to a degassing step but it is possible to fill the capsules with coffee that has just been roasted and ground.

## Claims

1. Capsule for beverages comprising a casing (2) in turn comprising: a base wall (3) and a side wall (4) defining a cavity (5) that is suitable for containing an initial product (P) to be combined with a fluid (F) to obtain a final product, and further a flange rim (7) extending from said side wall (4), said base wall (3) having an opening (30) bounded by a base rim (3a) extending up to said side wall (4); wherein said capsule further comprises a cover element (8), fixed to said flange rim (7) to seal hermetically said cavity (5) which is perforable by extracting means or injecting means of a dispensing machine in which said capsule is usable, and a closing element (26) fixed to said base rim (3a) to seal hermetically said opening (30), which closing element (26) is respectively perforable by injecting means or extracting means of said dispensing machine; said capsule being **characterised in that** said closing element (26) is of greater dimensions than said base wall (3) and is also fixed to said side wall (4) to remain joined to said capsule even in the presence of a pressure increase inside said capsule.

2. Capsule according to claim 1, wherein said base rim (3a) defines a base edge with said side wall (4), said closing element (26) extending beyond said base edge (34) and being superimposed on said side wall (4) along the entire said base edge (34).

3. Capsule according to claim 1, or 2, wherein said closing element (26) is superimposed and fixed to said side wall for at least one strip of 2 mm measured from said base edge (34), in particular preferably for a strip of 2.5 mm.

4. Capsule according to any preceding claim, wherein said closing element (26) is superimposed and fixed to said side wall (4) for the entire side wall (4).

5. Capsule according to any one of claims 2 to 4, wherein said closing element (26) is disk-shaped and has a diameter that is greater than a diameter of said base wall (3).

6. Capsule according to claim 5, wherein said side wall comprises a first portion (4a) connected to said base edge (34) and a second portion (4b) defining with said first portion (4a) a side edge (35), said closing element (26) being fixed to said first portion (4a) of said side wall (4).

7. Capsule according to claim 6, wherein said first portion (4a) is of frustoconical shape and has a first tilt that is greater than a second tilt of said second portion (4b), which is also of frustoconical shape, said first and said second tilt being measured with respect to a symmetry axis (A) of said capsule.

8. Capsule according to any preceding claim, wherein said closing element (26) is fixed to said base rim (3a) of said capsule (1) and to said side wall (4) by thermowelding at a joining portion (33).

9. Capsule according to claim 8, as appended to claim 6, or 7, wherein said joining portion (33) extends in said base rim (3a) and in said first portion (4a) through said base edge (34) up to said side edge (35).

## Patentansprüche

1. Kapsel für Getränke, mit einem Gehäuse (2), das wiederum aufweist: eine Basiswand (3) und eine Seitenwand (4), die einen Hohlraum (5) definieren, der zum Enthalten eines anfänglichen Produktes (P) geeignet ist, das mit einem Fluid (F) zu kombinieren ist, um ein Endprodukt zu erhalten, und weiterhin einen Flanschrand (7), der sich von der Seitenwand (4) erstreckt, wobei die Basiswand (3) eine Öffnung (30) aufweist, die von einem Basisrand (3a) begrenzt ist, der sich bis zu der Seitenwand (4) erstreckt; wobei die Kapsel weiterhin ein Abdeckelement (8), das an dem Flanschrand (7) festgelegt ist, um den Hohlraum (5) hermetisch abzudichten, und das durch Extrahiermittel oder Injiziermittel einer Ausgabemaschine, in der die Kapsel verwendbar ist, perforierbar ist, und ein Verschließelement (26) aufweist, das an dem Basisrand (3a) festgelegt ist, um die Öffnung (30) hermetisch abzudichten, wobei das Verschließelement (26) durch Injiziermittel oder Extrahiermittel der Ausgabemaschine respektive perforierbar ist; wobei die Kapsel **dadurch gekennzeichnet ist, dass** das Verschließelement (26) größere Abmessungen aufweist als die Basiswand (3) und ebenso an der Seitenwand (4) festgelegt ist, um sogar bei einem Druckanstieg innerhalb der Kapsel mit der Kapsel gefügt zu bleiben.

2. Kapsel nach Anspruch 1, wobei der Basisrand (3a) eine Basiskante mit der Seitenwand (4) definiert, wobei das Verschließelement (26) sich über die Basiskante (34) hinaus erstreckt und der Seitenwand (4) entlang der gesamten Basiskante (34) überlagert ist.

3. Kapsel nach Anspruch 1 oder 2, wobei das Verschließelement (26) über zumindest einen Streifen von 2 mm, gemessen von der Basiskante (34), insbesondere vorzugsweise über einen Streifen von 2,5 mm, der Seitenwand überlagert und an dieser festgelegt ist.

4. Kapsel nach irgendeinem vorhergehenden Anspruch, wobei das Verschließelement (26) über die gesamte Seitenwand (4) der Seitenwand (4) überlagert und an dieser festgelegt ist.

5. Kapsel nach irgendeinem der Ansprüche 2 to 4, wobei das Verschließelement (26) scheibenförmig ist und einen Durchmesser aufweist, der größer ist als ein Durchmesser der Basiswand (3).

6. Kapsel nach Anspruch 5, wobei die Seitenwand einen ersten Abschnitt (4a), der mit der Basiskante (34) verbunden ist, und einen zweiten Abschnitt (4b) aufweist, der mit dem ersten Abschnitt (4a) eine Seitenkante (35) definiert, wobei das Verschließelement (26) an dem ersten Abschnitt (4a) der Seitenwand (4) festgelegt ist.

7. Kapsel nach Anspruch 6, wobei der erste Abschnitt (4a) kegelstumpfförmig ist und eine erste Neigung aufweist, die größer ist als eine zweite Neigung des zweiten Abschnittes (4b), der ebenfalls kegelstumpfförmig ist, wobei die erste und die zweite Neigung bezüglich einer Symmetrieachse (A) der Kapsel gemessen sind.

8. Kapsel nach irgendeinem vorhergehenden Anspruch, wobei das Verschließelement (26) an dem Basisrand (3a) der Kapsel (1) und an der Seitenwand (4) durch Thermoschweißen an einem Fügeabschnitt (33) festgelegt ist.

9. Kapsel nach Anspruch 8, soweit von Anspruch 6 oder 7 abhängig, wobei sich der Fügeabschnitt (33) in dem Basisrand (3a) und in dem ersten Abschnitt (4a) durch die Basiskante (34) bis zu der Seitenkante (35) erstreckt.

## Revendications

1. Capsule pour boissons comprenant une enveloppe (2) comprenant à son tour : une paroi de fond (3) et une paroi latérale (4) définissant une cavité (5) qui est apte à contenir un produit initial (P) à combiner avec un fluide (F) afin d'obtenir un produit final, et en outre un rebord de bride (7) s'étendant depuis ladite paroi latérale (4), ladite paroi de fond (3) possédant une ouverture (30) délimitée par un rebord de fond (3a) s'étendant vers le haut jusqu'à ladite paroi latérale (4) ; dans laquelle ladite capsule comprend en outre un élément couvrant (8), fixé audit rebord de bride (7) pour sceller hermétiquement ladite cavité (5) qui est perforable par des moyens d'extraction ou des moyens d'injection d'une machine de distribution dans laquelle ladite capsule est utilisable, et un élément de fermeture (26) fixé audit rebord de fond (3a) pour sceller hermétiquement ladite ouverture (30), lequel élément de fermeture (26) est respectivement perforable par des moyens d'injection ou des moyens d'extraction de ladite machine de distribution ; ladite capsule étant **caractérisée en ce que** ledit élément de fermeture (26) est de dimensions supérieures à ladite paroi de fond (3) et est également fixé à ladite paroi latérale (4) de manière à rester attaché à ladite capsule même en présence d'une augmentation de la pression à l'intérieur de ladite capsule.

2. Capsule selon la revendication 1, dans laquelle ledit rebord de fond (3a) définit un bord inférieur avec ladite paroi latérale (4), ledit élément de fermeture (26) s'étendant au-delà dudit bord inférieur (34) et étant superposé sur ladite paroi latérale (4) sur toute la longueur dudit bord inférieur (34).

3. Capsule selon la revendication 1, ou 2, dans laquelle ledit élément de fermeture (26) est superposé et fixé à ladite paroi latérale pour au moins une bande de 2 mm mesurés depuis ledit bord inférieur (34), notamment de préférence pour une bande de 2,5 mm.

4. Capsule selon l'une quelconque des revendications précédentes, dans laquelle ledit élément de fermeture (26) est superposé et fixé à ladite paroi latérale (4) sur l'intégralité de la paroi latérale (4).

5. Capsule selon l'une quelconque des revendications 2 à 4, dans laquelle ledit élément de fermeture (26) est en forme de disque et a un diamètre qui est supérieur à un diamètre de ladite paroi de fond (3).

6. Capsule selon la revendication 5, dans laquelle ladite paroi latérale comprend une première portion (4a) reliée audit bord inférieur (34) et une seconde portion (4b) définissant avec ladite première portion (4a) un bord latéral (35), ledit élément de fermeture (26) étant fixé à ladite première portion (4a) de ladite paroi latérale (4).

7. Capsule selon la revendication 6, dans laquelle ladite première portion (4a) est de forme tronconique et présente une première inclinaison qui est supérieure à une seconde inclinaison de ladite seconde portion (4b), qui est également de forme tronconique, ladite première et ladite seconde inclinaison étant mesurées par rapport à un axe de symétrie (A) de ladite capsule.

8. Capsule selon l'une quelconque des revendications précédentes, dans laquelle ledit élément de fermeture (26) est fixé audit rebord de fond (3a) de ladite capsule (1) et à ladite paroi latérale (4) par soudage thermique au niveau d'une portion de jonction (33).

9. Capsule selon la revendication 8, lorsqu'elle dépend de la revendication 6, ou 7, dans laquelle ladite portion de jonction (33) s'étend dans ledit rebord de fond (3a) et dans ladite première portion (4a) à travers ledit bord inférieur (34) jusqu'audit bord latéral (35).
